# EUROPEAN PATENT APPLICATION

(11) **EP 2 223 905 A1**
(43) Date of publication of application: **01.09.2010**
(21) Application number: 09450043.6
(22) Date of filing: 27.02.2009
(51) Int. Cl.: C04B 35/486, C04B 35/632, C01G 25/02, B01J 35/10, B01J 21/06

(54) **Novel zirconia ceria compositions**

(71) Applicant: Treibacher Industrie AG, 9330 Treibach-Althofen (AT)
(72) Inventor: Schermanz, Karl, 9314 Launsdorf (AT); Sagar, Amod, 9330 Althofen (AT)
(74) Representative: Schwarz, Albin

(57) **Abstract**

Composition in the form of a solid-solid solution which is phase stable at 1150°C /36 hours and at 1200° / 4 hours, the composition comprising oxides of zirconium and cerium wherein the oxide of zirconium is enriched, an oxide of erbium, gadolinium, dysprosium, or yttrium as a stabilizer in an amount of 10% to 30% by weight, and optionally one ore more dopant, a composition in the form of a solid-solid solution comprising oxides of zirconium and cerium wherein the oxide of zirconium is enriched, an oxide of erbium or oxide of dysprosium as a stabilizer in an amount of 10% to 30% by weight and optionally one ore more dopant, the use of such compositions in a system for exhaust gas after treatment and a process which is appropriate for the preparation of such compositions.

## Description

The present invention refers to Zirconia (oxide of zirconium)-Ceria (oxide of cerium) based compositions having excellent thermal phase and surface stability and a process for the manufacture thereof. Such compositions may be used e.g. as Oxygen Storage Components (OSC) of catalysts (mainly Three Way Catalysts, TWC) in the exhaust gas after treatment in automotive application.

In spite of the fact that Rare Earth doped Ceria-Zirconia based mixed oxides are worldwide used in automotive application, there is still the need to improve performance and production routes of the powders especially in terms of phase stability and surface area after thermal treatment.

### Background of the invention

Among the oxygen storage materials currently used in the TWC application those based upon "Rare Earth doped Ceria-Zirconia" typically perform the best. The development of Ceria-Zirconia Mixed Oxides started already in the late 1980s and achieved widespread incorporation into automotive catalyst application by the mid 1990 under the name of "Advanced TWC formulations" (J.P. Cuif, G. Blanchard, O. Touret et al., Rhone Poulenc, SAE Technical Paper 96, 1906 (1996).

To reduce the cold start emissions in exhaust gases of engines the car manufacturers use close coupled TWCs, such as disclosed in EP 1 181 970. For this purpose these catalysts must show long term durability and thermal stability at temperatures higher than 1000°C. Thermal phase stability and thermal surface stability are main parameters which are considered to be of relevance for durability and stability of the catalyst.

Thus, during the recent development of Ceria-Zirconia OSC materials there was drawn much attention to the improvement of thermal phase stability (expressed as XRD phase purity) and thermal surface stability (expressed as surface area) of the compounds.

It is well known that for the catalyst application of Ceria-Zirconia materials high surface area is required to guarantee durability of the catalysts, as e.g. disclosed in EP 955 267, wherein Ce-Zr materials showing surface areas of > 20 m²/g after being heat treated at 1100°C for 6 hours is also disclosed.

For example in US 6,387,338 there are disclosed thermally phase stable Ceria-Zirconia materials having a stable cubic phase structure after ageing in air at 1200°C. Accordingly it is suggested to prepare such phase stable Ceria-Zirconia Mixed Oxides by means of coprecipitating Ceria and Zirconia together with Yttrium and optionally using dopants of "earth metals". Yttrium is claimed to be mandatory up to a concentration of 10 mol% in the compounds to yield phase stable Ceria-Zirconia compounds. However, thermal surface stabilities of the compounds described in US 6,387,338 are considered to be low. More in detail, Example 5 in US 6,387,338 refers to the preparation of ZrCeLaY mixed oxide with a molar ratio of Zr0,65 Ce0,25 La 0,04 Y 0,06 and O 1,95 (corresponding to a weight % ratio of ZrO₂(58.71%) CeO₂(31.54%) La₂O₃(4.78%) Y₂O₃(4.97%)) by means of co-precipitation with ammonia. But the Mixed Oxide obtained is described to exhibit a surface area of 3,75 m²/g only after ageing at 1150°C / 36 hours, see also comparative example 1 of the present application, wherein the product yielded did show a surface area of 3,8 m²/g after heat treatment at 1100°C / 4 hours only. Exactly the same composition is reported in example 7 of US 2007/0244002 to show a surface area after treatment at 1000°C / 6 hours of 13,7 m²/g only, whereby the composition also is obtained by the co-precipitation technology. In addition, in all the other examples 1 to 6 of US 2007/0244002 very low values of surface areas, all well below 10 m²/g, after heat treatment of the compounds at 1000°C / 6 hours are reported. This leads to the conclusion that the co-precipitation technology alone, as disclosed in numerous examples, provides only low surface area compounds after heat treatment.

It seems that according to US 6,387,338 the problem of thermal phase stability of the material obtained may be solved but the problem of thermal stability of surface area, particularly after ageing at 1100°C, remains unsolved which is a significant disadvantage when applying such material in a catalyst.

In WO 2004/085039 the preparation of thermally surface stable materials is disclosed but no information on the phase stability is provided. E.g. in example 2 the preparation of CeO₂/ZrO₂/La₂O₃/Pr₆O₁₁ (60/30/3/7 weight percent ratio) is disclosed and a surface area of 23 m²/g after ageing at 1100°C / 4 hours is reported, but the phase stability is not addressed.

Similarly, in WO 2004/002893 the preparation and surface properties of a Zr rich Ce mixed Oxide with the composition ZrO₂/CeO₂/La₂O₃/Nd₂O₃ = 73,5/20/2,5/4 weight percent having a surface area of 23m²/g for the material after being aged at 1100°C / 10 hours, is disclosed but the phase stability again is not addressed.

In E. Rohart et al., "From Zr-rich to Ceria rich: thermal stability of OSC materials on the whole range of composition", Topics in Catalysis, Vols. 30/31, July 2004, pages 417 - 423, not only the surface stability of Ce-Zr compounds, but also the phase stability of Ceria Zirconia Mixed Oxides after heat treatment (ageing) is reported. For example for the material "OSC 5"(CeO₂/ZrO₂/La₂O₃/Pr₆O₁₁; 60/30/3/7 weight percent ratio) which corresponds exactly to the composition as disclosed in example 2 in WO 2004/085039 it was shown by XRD spectra that a single phase material after being heat treated at 1150°C / 4 hours is obtained, having a surface area of 23 m²/g after ageing at 1100°C / 4 hours. According to Rohart et al. the synthesis of Ce-rich Zr-Mixed Oxides yields phase and surface stable compounds.

Zr-rich materials however do show phase segregation independently from their synthesis pathway.

Rohart et al. report on the thermal phase stability of "Zr-rich" materials such as "OSC 3" (composition = ZrO₂/CeO₂/La₂O₃/Nd₂O₃ = 75/20/2,5/2,5 weight percent; surface area of 10 m²/g after 1100°C / 4 hours) and "OSC 7" (composition = ZrO₂/CeO₂/La₂O₃/Nd₂O₃ = 72/20/3/5 weight percent; surface area of 22 m²/g after treatment at 1100°C / 4 hours) which is very similar to the composition referred to in W02004/002893. Independently of the routes of their synthesis (the 2 materials have been synthesized by different processes) these compounds do already show a phase segregation after ageing at 1000°C / 4 hours and more pronounced according to the disclosed XRD spectra after ageing at 1100°C / 4 hours and 1150°C / 4 hours.

A further improvement with relation to both, phase and surface stability is alleged in the application WO 2007/093593. The preparation of several Ceria /Zirconia /Yttria (yttrium oxide) - Mixed Oxides additionally doped with other Rare Earths and containing an Oxide of Lanthanum is described by applying the preparation method of co-precipitation technology followed by an autoclaving step. More in detail the mixed metals are precipitated by ammonia out of solutions and the precipitate subsequently is treated in an autoclave at approximately 150°C and afterwards with a surfactant. Calcination of the "surfactant treated material" (Mixed Metal Oxide precursor) yields the Ceria/Zirconia/Yttria mixed Metal Oxides. Yttrium is postulated to be present in the composition in the range of 10 - 25 by weight % and in addition lanthanum in the range of 2 to 10% by weight and further another Rare Earth element in the range of 2- 15% by weight to achieve single phase materials. According to XRD spectra the disclosed compounds exhibit a stable single phase XRD structure after heat treatment at 1150°C / 10 hours and show surface areas in a range of 34 to 62 m²/g after treatment at 1000°C / 4 hours and 17 to 32 m²/g after treatment at 1100°C / 10 hours, depending on the specific composition. The preparation of the compounds disclosed in WO 2007/093593 comprises a process step of autoclaving which particularly under technical conditions is a disadvantage as it is operated under pressure and therefore requires stringent safety precautions.

### Summary of the invention

Now, surprisingly, Zr-Ce Mixed Oxides, wherein zirconium is enriched have been found having high surface area after ageing and showing excellent thermal phase stability up to 1200°C which are e.g. useful in a system for exhaust gas after treatment.

In one aspect the present invention provides a composition in the form of a solid-solid solution which is phase stable at 1150°C /36 hours and at 1200° / 4 hours, the composition comprising
- oxides of zirconium and cerium wherein the oxide of zirconium is enriched,
- a stabilizer in an amount of 10% to 30% by weight wherein the stabilizer is selected from an oxide of erbium, oxide of gadolinium, oxide of dysprosium, or oxide of yttrium, and optionally one ore more dopant,
with the proviso that, if an oxide of yttrium is present as a stabilizer, then the dopant is other than an oxide of lanthanum.

In another aspect the present invention provides a composition in the form of a solid-solid solution which is phase stable at 1150°C / 36 hours and at 1200° / 4 hours, the composition comprising
- oxides of zirconium and cerium wherein the oxide of zirconium is enriched,
- a stabilizer in an amount of 10% to 30% by weight wherein the stabilizer is selected from an oxide of erbium, oxide of gadolinium or oxide of dysprosium, e.g. from an oxide of erbium or oxide of dysprosium, and, optionally,
- one or more dopants, e.g. each in an amount of up to 8% by weight.

In another aspect the present invention provides a composition in the form of a solid-solid solution comprising oxides of zirconium and cerium wherein the oxide of zirconium is enriched, a stabilizer in an amount of 10% to 30% by weight wherein the stabilizer is selected from an oxide of erbium or oxide of dysprosium, and optionally one ore more dopant.

Composition(s), use(s) or process(es) provided by the present invention are herein also designated as "Composition(s), use(s) or process(es) of (according to) the present invention".

A composition of the present invention comprises an oxide of zirconium, preferably ZrO₂, and an oxide of cerium, preferably CeO₂.

In a composition of the present invention more oxide of zirconium is present than oxide of cerium which means that in a composition of the present invention the oxide of zirconium is enriched, compared with the oxide of cerium.

Preferably a composition of the present invention comprises an oxide of zirconium in the range of 45% to 65%, such as 50% to 65%, e.g. 50 to 60% per weight and an oxide of cerium in the range of 10% to 30%, such as 15% to 30% by weight.

A composition of the present invention comprises a stabilizer including one or more stabilizers, preferably one stabilizer, in a total amount of 10% to 30% by weight, such as a composition wherein at least one stabilizer is present in an amount of at least 10% and up to to 30% by weight, such as 10 to 25% by weight, e.g. 10 to 20% by weight, wherein the stabilizer is selected from an oxide of erbium, oxide of gadolinium, oxide of dysprosium, or oxide of yttrium, e.g. an oxide of erbium or an oxide of dysprosium, with the proviso that, if an oxide of yttrium oxide is present as a stabilizer and a dopant is present then the dopant is other than an oxide of lanthanum; e.g. and, if a second and optionally a further stabilizer is present, the second or further stabilizer is present in an amount of greater than 8% by weight, e.g. 9% by weight and more, such that the total amount of stabilizer is up to 30% by weight of the composition.

The "stabilizer" as used herein seems to contribute to phase and/or thermal stabilization of a composition of the present invention.

In another aspect a composition of the present invention comprises an oxide of erbium as a stabilizer, e.g. in an amount of 10 to 20% by weight.

In another aspect a composition of the present invention comprises an oxide of dysprosium as a stabilizer, e.g. in an amount of 10 to 20% by weight.

In another aspect a composition of the present invention comprises an oxide of gadolinium as a stabilizer e.g. in an amount of 10 to 20%, such as 15% by weight.

In another aspect a composition of the present invention comprises an oxide of yttrium as a stabilizer e.g. in an amount of 15 to 25%, such as 20% by weight.

In one embodiment of the present invention a stabilizer is selected from Er₂O₃, Dy₂O₃ and Gd₂O₃, e.g. in an amount of 10% to 20% by weight of the composition.

In another embodiment of the present invention a stabilizer is Y₂O₃, e.g. in an amount of 15 to 25% by weight of the composition.

A "dopant" as used herein includes a compound which seems to contribute to thermal and/or phase stability of a composition of the present invention.

A composition of the present invention comprises optionally one or more dopants, e.g. each dopant in an amount of up to 8% by weight, e.g. 0.5 to 8.0%, such as 1.0 to 8.0% by weight, e.g. the total amount of dopant being up to 35%, e.g. up to 20%, e.g. up to 10%, e.g. in case that an oxide of yttrium is used as a stabilizer the total amount of dopant is 1.0% to 10%, such as 1.0 to 8%, such as 1.5% to 5.0% by weight; and in case that a stabilizer is other than yttrium, the total amount of dopant is up to 15%, such as up to 10%, e.g. 3% to 15%, such as 5% to 10%.

A dopant in a composition of the present invention is preferably selected from oxides of rare earth metals, e.g. including oxides of praseodymium, neodymium, lanthanum and samarium, preferably praseodymium, neodymium and lanthanum; and, if the stabilizer is other than erbium, including oxides of erbium, and, if the stabilizer is other than gadolinium, including oxides of gadolinium, and, if the stabilizer is other than dysprosium, including oxides of dysprosium; but excluding oxides of lanthanum, if the stabilizer is yttrium.

For the case that an oxide of erbium, gadolinium or dysprosium is used as a stabilizer, in a composition of the present invention
- preferably one or two dopants are present,
- preferably a dopant is selected from an oxide of lanthanum or praseodymium; or, for the case that the stabilizer is other than an oxide of erbium, a dopant also may be an oxide of erbium;
- preferably the total amount of dopants in a composition of the present invention is up to and including 35%, such as 15%, e.g. 12% by weight, such as 10% by weight,
- preferably at least an oxide of lanthanum is present in an amount of 3% to 8%, such as 5% to 7% by weight as a dopant; and optionally, e.g. additionally, an oxide of praseodymium is present as a dopant; e.g. in an amount of 2% to 6% by weight, such as 3% to 5% by weight.

For the case that an oxide of yttrium is used as a stabilizer, in a composition of the present composition of the present invention
- preferably two dopants are present,
- a dopant is preferably selected from an oxide of erbium, neodymium or gadolinium;
- the total amount of dopants is up to and including 10%, such as 8% by weight, e,g, 5% by weight, e.g. 1.0% to 10%, such as 1.5% to 5.0% by weight,
- preferably at least an oxide of erbium is present in an amount of 1.0% to 5.0%, e.g. 1.5% by weight, as a dopant; and optionally additionally an oxide of praseodymium or neodymium or gadolinium is present as a dopant; e.g. each in an amount of 2.0% to 6.0% by weight, such as 3.0% to 5.0% by weight, e.g. 3.5% by weight;
- an oxide of lanthanum as a dopant is excluded.

In a preferred embodiment of the present invention the stabilizer is Y₂O₃ in an amount of 15 to 25% by weight, e.g. comprising one or more dopants, each in an amount of up to 8% by weight, which dopants are rare earth metal oxides, other than an oxide of lanthanum.

In another aspect the present invention provides a composition of the present invention, comprising an oxide of yttrium as a stabilizer and one or more dopants selected from rare earth metal oxides other than an oxide of lanthanum,
such as an oxide of erbium, oxide of gadolinium, oxide of neodymium or oxide of praseodymium, e.g. wherein the total amount of dopants is up to and including 10% by weight;
e.g. wherein as a dopant an oxide of erbium is present in an amount of 1.0% to 2.0%, e.g. and optionally additionally an oxide of praseodym, oxide of neodymium or oxide of gadolinium is present as a dopant in an amount of 3% to 5% by weight.

An oxide of erbium as used herein includes Er₂O₃.

An oxide of gadolinium as used herein includes GdO or Gd₂O₃, preferably Gd₂O3.

An oxide of dysprosium as used herein includes Dy₂O₃.

An oxide of yttrium as used herein includes Y₂O₃.

An oxide of lanthanum as used herein includes La₂O3.

An oxide of neodymium as used herein includes Nd₂O₃ or NdO₂, preferably Nd₂O₃.

An oxide of praseodymium as used herein includes Pr₆O₁₁, PrO₂ or Pr₂O₃, preferably Pr₆O₁₁.

It has been surprisingly found that the weight ratio of the stabilizer and the dopant which are present in a composition of the present invention may be of importance, e.g. may be important for exhibiting the desired phase stability.

In a preferred embodiment of the present invention a composition of the present invention comprises beside a stabilizer a dopant wherein the stabilizer and the total amount of dopant are in a weight ratio of from 1.5:1 to 5:1, e.g. in another aspect the present invention provides a composition comprising
- oxides of zirconium and cerium wherein the oxide of zirconium is enriched,
- a stabilizer in an amount of 10% to 30% by weight wherein the stabilizer is selected from an oxide of erbium, oxide of gadolinium, oxide of dysprosium and oxide of yttrium, such as an oxide of erbium, or an oxide of dysprosium, and
- one or more dopants, each in an amount of up to 8% by weight,
wherein the stabilizer and the total amount of dopant are in a weight ratio of from 1.5:1 to 5:1, with the proviso that, if an oxide of yttrium is present as a stabilizer, then the dopant is other than an oxide of lanthanum.

Also it has been found, as shown in comparative example 3, that the amount of the stabilizer in a composition according to the present invention is of importance; e.g. a segregated material is obtained after treatment at 1150°C / 36 hours, if the stabilizer (oxide of erbium) is present in a in an amount of about 5% only, whereas the composition is stable if 10% of the stabilizer are used, as in a composition according to the present invention.

In another aspect the present invention provides a composition according to the present invention, comprising 55% to 65% by weight of an oxide of zirconium, e.g. ZrO₂, 10% to 20% by weight of an oxide of cerium, e.g. CeO₂, 15 to 25% by weight of an oxide of yttrium, e.g. Y₂O₃, and one or more dopants in an amount of up to 10% by weight, such as up to 6% by weight, e.g. up to 5% by weight, which dopants are oxides of rare earth metals, other than an oxide of lanthanum, e.g. La₂O₃;
e.g. an oxide of erbium, such as Er₂O₃ in an amount of 1% to 2% by weight, and optionally additionally an oxide of praseodymium, e.g. Pr₆O₁₁, oxide of neodymium, such as Nd₂O₃, or oxide of gadolinium, e.g. Gd₂O₃, in an amount of 3% to 5% by weight.

In another aspect the present invention provides a composition of the present invention, comprising
- oxides of zirconium and cerium wherein the oxide of zirconium is enriched,
- a stabilizer in an amount of 10% to 30% by weight wherein the stabilizer is selected from an oxide of erbium, oxide of gadolinium, or oxide of dysprosium, e.g. from an oxide of erbium or oxide of dysprosium, and, optionally, e.g. preferably
- one or more dopants,
- e.g. wherein the dopant comprises one or more, e.g. one or two rare earth metals in the form of oxides, e.g. each in an amount of 2.0% to 8% by weight, such as 3% to 7% by weight, and the total amount of dopants is up to and including 12% by weight, such as 10% by weight; e.g. 2% to 12% by weight.

In a further aspect the present invention provides a composition according to the present invention comprising 50% to 60% by weight of ZrO₂, 15% to 30% by weight of CeO₂ and 10 to 30% by weight of either Er₂O₃, Dy₂O₃ or Gd₂O₃; e.g. or Y₂O_{3;} such as Er₂O₃, Dy₂O₃, and, optionally, one or more dopants,
- e.g. one or two oxides of rare earth metals,
- each dopant in an amount of up to 8%, such as 1.5% to 7% by weight, and the total amount of dopants is up to and including 15% by weight, such as 10% by weight; preferably at least an oxide of erbium is present in an amount of 1% to 2%, e.g. 1.5% as a dopant; and optionally additionally an oxide of praseodymium or neodymium or gadolinium is present as a dopant; e.g. each in an amount of 2% to 6% by weight, such as 3% to 5% by weight, e.g. 3.5% by weight;
- e.g. wherein the dopant is selected from an oxide of lanthanum, oxide of neodymium or oxide of praseodymium, or, for the case that the stabilizer is other than an oxide of erbium, further including an oxide of erbium, or, for the case that the stabilizer is other than an oxide of gadolinium, including an oxide of gadolinium.

A composition and a compound of the present invention shows phase stability at 1150°C / 36 hours and at 1200°C / 4 hours; and, at the same time, exhibits a thermal stability in surface area of at least 15 m²/g after treatment at 1100°C / 4 hours.

In another aspect a composition according to the present invention is provided which composition exhibits a thermal stability in surface area of at least 15 m²/g after treatment at 1100°C / 4 hours.

A composition of the present invention is e.g. useful as a component in a system for exhaust gas after treatment.

In another aspect the present invention provides a composition of the present invention for use as a system for exhaust gas after treatment, e.g. wherein such system for exhaust gas after treatment includes three way catalysts, diesel particulate filters or oxidation catalysts.

In another aspect the present invention provides a process for the preparation of a composition in the form of a solid-solid solution comprising oxides of zirconium and cerium and optionally comprising further rare earth metal oxide(s), such as a composition according to the present invention, comprising
(a) providing an aqueous solution of a zirconyl salt, a cerium salt and optionally further rare earth metal salt(s) in a desired stoechiometric amount of the final product,
(b) treating the aqueous solution of step (a) with H₂O₂,
(c) treating the solution obtained in step (b) with ammonia and adjusting a pH of ≥ 7.0, e.g. 8.5 to 12,
(d) optionally treating the solution obtained in step (c) with an additive, e.g. a surfactant, such as lauric acid,
(e) isolating the precipitate formed, e.g. by filtration, centrifugation;
   and
(f) calcining the precipitate obtained in step (e), optionally after drying.

In another aspect the present invention provides a composition obtainable by such process.

Process step (a) may be carried out as appropriate, e.g. according, such as analogously, to a method as conventional. A mixture of appropriate Rare Earth Metal salts in a stoechiometric amount as desired in the final product may be dissolved in water, e.g. deionised or distilled water, e.g. under stirring at appropriate temperatures, e.g. room temperature, or above. Appropriate, water soluble salts of Rare Earth Metals, such as nitrates are known. Sulfates, and carbonates of Rare Earth Metals are less water soluble, but salt solubility in water may be improved by heating of the mixture, by, e.g. vigorous, stirring, by treatment of the aqueous Rare Earth Metal salt mixture with an acid, such as an inorganic acid, e.g. HNO₃, HCl, for example in the case of carbonate salts.

Process step (b) may be carried out as appropriate, e.g. according, such as analogously, to a method as conventional. For the treatment of the aqueous mixture of the Rare Earth Metal salts an aqueous H₂O₂ solution, e.g. 20 to 40% aqueous solution, e.g. cooled, e.g. cooled to 5°C to 10°C, may be used. Treatment may be carried out at appropriate temperatures, such as room temperature and below, e.g. at 0°C to 20°C, under stirring and stirring may be continued after treatment for some time, e.g. for an appropriate time such as 30 minutes to several hours.

Process step (c) may be carried out as appropriate, e.g. according, such as analogously, to a method as conventional. Preferably an aqueous solution of ammonia, such as a 20% to 30% aqueous solution, may be used for treatment. Treatment may be carried out at appropriate temperatures, e.g. the aqueous ammonia solution may be cooled, e.g. to 5 to 15°C, before treatment and may be added to the solution obtained in step (b) slowly, e.g. dropwise, in order to control the temperature which may raise during treatment. Treatment may be carried out under stirring, e.g. vigorous stirring. Treatment is continued until a pH of ≥ 7.0, e.g. such as 9 to 10, is adjusted and stirring is continued after treatment for some time, e.g. some minutes. A precipitate forms upon addition of the ammonia solution to the mixture obtained in step (b).

Process step (d) may be carried out as appropriate, e.g. according, such as analogously, to a method as conventional. An additive may be added to the mixture obtained in step (b). Appropriate additives and appropriate amounts are e.g. known from WO 98/45212. An additive as used herein includes surfactants. Preferably lauric acid is used as a surfactant. For the production of 50 g of a Mixed Oxide composition of the present invention an amount of approximately 10 g to 30 g, e.g. around 20 g, may be appropriate in case that lauric acid is used as an additive. Treatment with the additive is carried out under stirring, e.g. vigorous stirring. Stirring, e.g. vigorous stirring, is preferably continued after treatment for an appropriate time, such as for 30 minutes up to several hours, e.g. for ca. 1 hour.

Process step (e) may be carried out as appropriate, e.g. according, such as analogously, to a method as conventional. The precipitate formed is isolated from the mixture by filtration or centrifugation, preferably by filtration. The precipitate isolated is preferably washed with water, e.g. deionised or distilled water.

The precipitate isolated in step (e) optionally may be dried at appropriate temperatures, e.g. 80°C up to shortly below 300°C.

Process step (f) may be carried out as appropriate, e.g. according, such as analogously, to a method as conventional. Calcining may be carried out at appropriate temperatures, e.g. including temperatures from 300°C to 700°C.

According to a process of the present invention thermally phase and surface stable Zr-Ce Mixed Oxides may be obtained; e.g. Zr-Ce Mixed Oxides showing phase stability up to 1200°C / 4 hours and exhibiting surface areas of at least 15 m²/g after treatment at 1100°C /4 hours.

One advantage of a process of the present invention is, that the process is simple and complex and costly process steps are avoided. Autoclaving for example is cost intensive and requires additional safety precautions on the equipment and such autoclaving, e.g. as disclosed for example for the preparation of Ce-Zr Mixed Oxides in WO 2007/093593, may be avoided in a process of the present invention; and thus compositions of the present invention may be provided without using autoclaving, e.g. autoclaving may be omitted.

In comparative examples 1 to 4 herein it is shown that phase and thermally stable Zr-Ce Mixed Oxides according to the present invention cannot be prepared
- by simple exchange of Rare Earth Elements in Zr-Ce Mixed Oxides compositions,
- by using arbitrary stocheometric ratios of the Rare Earths Elements,
- by using arbitrary amounts of Rare Earth Elements in Zr-Ce Mixed Oxides compositions. The compounds as reported in comparative example 2 to 4 herein showed phase segregation after ageing. Depending on the applied process route the compounds exhibited different surface areas after ageing. The compound as reported in comparative example 1 showed low and unsatisfying surface area.

In the following examples all temperatures are in degree Celsisus (°C).

The Zr-Ce Mixed Metal Oxides were characterised in terms of phase stability (X-Ray diffraction (XRD) spectra) and terms of Surface Area (BET) after heat treatment (ageing).

Surface area (BET) analysis was performed with Quantachrome NOVA 4000 according to DIN (Deutsche Industrie Norm) 66131.

The XRD spectra were recorded on PANalytical X'Pert diffractometer (equipped with multiple strip detector "PIXcel"), operated at 45kV and 40 mA with graphite monochromator Cu-Ka radiation. Spectra were collected with a step size of 0, 0131° and accounting time of 39 sec per angular abscissa in the range of 10-80°.

The Figures (Fig. 1 to Fig. 21) show X-Ray diffraction (XRD) spectra of the compositions obtained according to examples 1 to 9 and comparative examples 2, 3 and 4.
Fig. 1 and Fig. 2 show XRD spectra after ageing at 1150°C / 36 hours, and 1200°C / 4 hours, respectively, of the ZrO₂(58%) CeO₂(27%) Er₂O₃(10%) La₂O₃(5%) composition of example 1.
Fig. 3 and Fig. 4 show XRD spectra after ageing at 1150°C / 36 hours, and 1200°C / 4 hours, respectively, of the ZrO₂(55%) CeO₂(25%) Er₂O₃(15%) La₂O₃(5%) composition of example 2.
Fig. 5 and Fig. 6 show XRD spectra after ageing at 1150°C / 36 hours, and 1200°C / 4 hours, respectively, of the ZrO₂(50%) CeO₂(20%) Er₂O₃(20%) La₂O₃(5%) Pr₆O₁₁(5%) composition of example 3.
Fig. 7 and Fig. 8 show XRD spectra after ageing at 1150°C / 36 hours, and 1200°C / 4 hours, respectively, of the ZrO₂(55%) CeO₂(20%) Dy₂O₃(15%) La₂O₃(7%) Pr₆O₁₁(3%) composition of example 4.
Fig. 9 and Fig. 10 show XRD spectra after ageing at 1150°C / 36 hours, and 1200°C / 4 hours, respectively, of the ZrO₂(55%) CeO₂(20%) Gd₂O₃(15%) La₂O₃(7%) Pr₆O₁₁(3%) composition of example 5.
Fig. 11 and Fig. 12 show XRD spectra after ageing at 1150°C / 36 hours, and 1200°C / 4 hours, respectively, of the ZrO₂(55%) CeO₂(20%) Dy₂O₃(15%) La₂O₃(5%) Er₂O₃(5%) composition of example 6.
Fig. 13 and Fig. 14 show XRD spectra after ageing at 1150°C / 36 hours, and 1200°C / 4 hours, respectively, of the ZrO₂(60%) CeO₂(15%) Y₂O₃(20%) Er₂O₃(1.5%) Pr₆O₁₁(3.5%) composition of example 7.
Fig. 15 and Fig. 16 show XRD spectra after ageing at 1150°C / 36 hours, and 1200°C / 4 hours, respectively, of the ZrO₂(60%) CeO₂(15%) Y₂O₃(20%) Er₂O₃(1.5%) Nd₂O₃(3.5%) composition of example 8.
Fig. 17 and Fig. 18 show XRD spectra after ageing at 1150°C / 36 hours, and 1200°C / 4 hours, respectively, of the ZrO₂(60%) CeO₂(15%) Y₂O₃(20%) Er₂O₃(1.5%) Gd₂O₃(3.5%) composition of example 9.
Fig. 19 shows the XRD spectrum after ageing at 1150°C / 36 hours of the ZrO₂(58,7%)CeO₂(27,5%)Y₂O₃(2,5%)Er₂O₃(2,5%)La₂O₃(6,3%)Pr₆O₁₁(2,5%) composition of comparative example 2.
Fig. 20 shows the XRD spectrum after ageing at 1150°C / 36 hours of the ZrO₂(58.7%) CeO₂(30%) La₂O₃(6.3%) Er₂O₃(5%) composition of comparative example 3.
Fig. 21 shows the XRD spectrum after ageing at 1150°C / 36 hours of the ZrO₂(73.69%) CeO₂(21.11%) Er₂O₃(5.19%) composition of comparative example 4.

### Example 1

### Preparation of Mixed Oxide ZrO₂(58%) CeO₂(27%) Er₂O₃(10%) La₂O₃(5%)

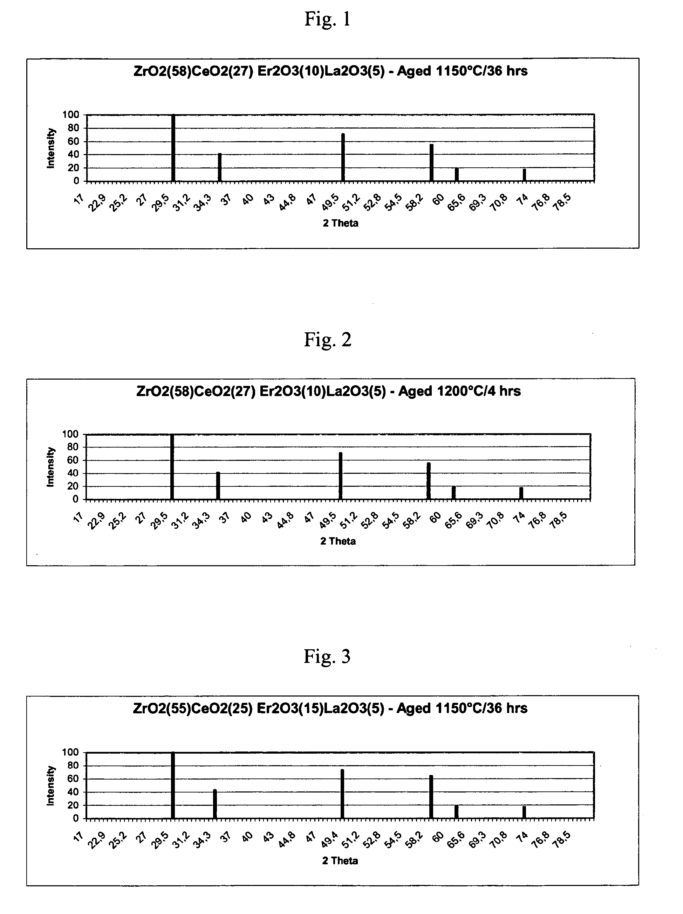

145 g of Zirconyl-nitrate solution (ZrO₂ 20%), 34.18 g of Cerium nitrate (CeO₂ 39.5%), 6.63 g of Lanthanum nitrate (La₂O₃ 37,7%) and 11.93 g of Erbium nitrate (Er₂O₃ 41.9%) were dissolved in 802 mL of deionised water and the mixture obtained was stirred for a few minutes until the solution became clear. To the mixture obtained 94.1 mL of cooled (10°C) 35% H₂O₂ were added and the mixture obtained was stirred for approximately 45 minutes. To the mixture obtained an aqueous, 24% ammonia solution (cooled to 10°C) was added dropwise with a dropping rate of 40 mL / minute and a pH value of 9.55 was adjusted. The mixed metals precipitated and, during precipitation, the temperature of the mixture rose up to approximately 40°C. The mixture obtained was kept stirring for a few minutes and 17.77 g of lauric acid were added. The slurry obtained was kept at vigorous stirring for at least 1 hour. The mixture obtained was filtered and the precipitate obtained was washed extensively with deionised water. The filter cake obtained was dried in an oven at approximately 100°C overnight (16 hours) and calcined at 500°C for 4 hours. 50 g of a mixed oxide composition comprising ZrO₂ (58%), CeO₂ (27%), Er₂O₃ (10%) and La₂O₃ (5%) were obtained.
BET (fresh prepared material): 110 m²/g
BET (after ageing) at 1100°C / 4 hours: 21.5 m²/g
XRD spectra after ageing at 1150°C / 36 hours and 1200°C / 4 hours showed single phase structure, as e.g. shown in Fig. 1 and Fig. 2.

### Example 2

### Preparation of Mixed Oxide ZrO₂(55%) CeO₂(25%) Er₂O₃(15%) La₂O₃(5%)

137.5 g of Zirconyl-nitrate solution (ZrO₂ 20%), 31.65 g of Cerium nitrate (CeO₂ 39.5%), 6.63 g of Lanthanum nitrate (La₂O₃ 37,7%) and 17.9 g of Erbium nitrate (Er₂O₃ 41.9%) were dissolved in 806 mL of deionised water and the mixture obtained was stirred for a few minutes until the solution became clear. To the mixture obtained 92.72 mL of cooled (10°C) 35% H₂O₂ was added and the mixture obtained was stirred for approximately 45 minutes. To the mixture obtained 24% aqueous ammonia solution (10°C) was added dropwise at room temperature with a dropping rate of 40 mL / minute and a pH of 9.65 was adjusted.

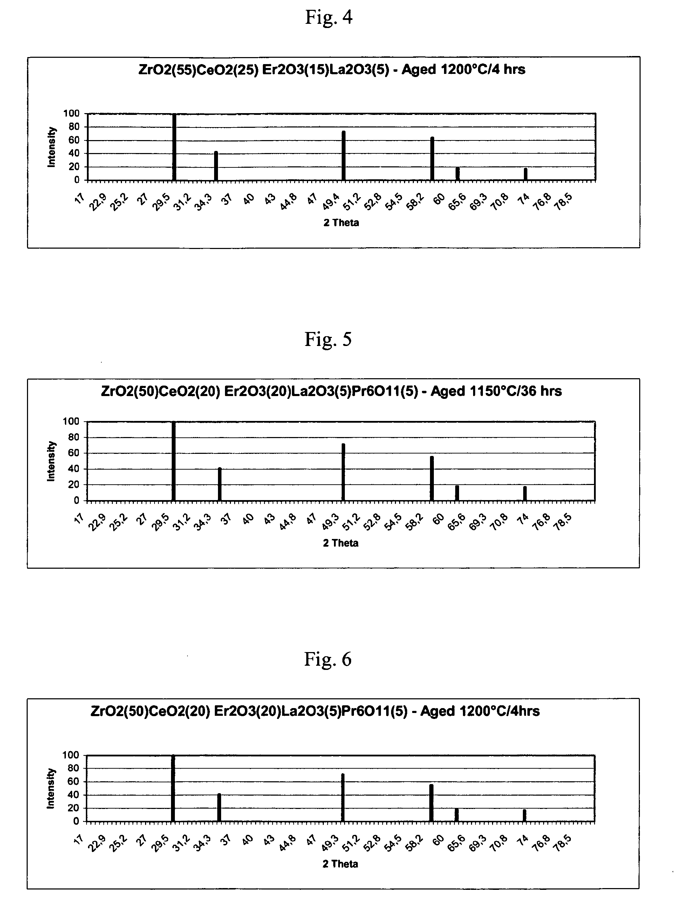

The further procedure was performed analogously as described in example 1 but using 17,5 g of lauric acid instead of 17.77 g. 50 g of a mixed oxide composition comprising ZrO₂ (55%), CeO₂ (25%), Er₂O₃ (15%) and La₂O₃ (5%) were obtained.
BET (fresh prepared material): 112 m²/g
BET (after ageing) at 1100°C / 4 hours: 20.7 m²/g
XRD spectra after ageing at 1150°C / 36 hours and 1200°C / 4 hours showed single phase structure, e.g. as shown in Fig. 3 and Fig. 4.

### Example 3

### Preparation of Mixed Oxide ZrO₂(50%) CeO₂(20%) Er₂O₃(20%) La₂O₃(5%) Pr₆O₁₁(5%)

125 g of Zirconyl-nitrate solution (ZrO₂ 20%), 25.32 g of Cerium nitrate (CeO₂ 39.5%), 6.63 g of Lanthanum nitrate (La₂O₃ 37,7%), 6.41 g of praseodymium nitrate (Pr₆O₁₁ 39.02%) and 23.87 g of Erbium nitrate (Er₂O₃ 41.9%) were dissolved in 812 mL of deionised water and the mixture obtained was stirred for a few minutes until the solution became clear. To the mixture obtained 90.82 mL of cold 35% H₂O₂ (10°C) were added and the mixture obtained was stirred for approximately 45 minutes. To the mixture obtained 24% aqueous ammonia solution (10°C) was added at room temperature dropwise with a dropping rate of 40 mL /minute and a pH of 9.6 was adjusted. The further procedure was performed analogously as described in example 1 but using 17.1 g of lauric acid instead of 17.77 g. 50 g of a mixed oxide composition comprising ZrO₂ (50%), CeO₂ (20%), Er₂O₃ (20%), La₂O₃ (5%) and Pr₆O₁₁ (5%) were obtained.
BET (fresh prepared material): 129 m²/g
BET (after ageing) at 1100°C / 4 hours: 21.8 m²/g
XRD spectra after ageing at 1150°C / 36 hours and 1200°C / 4 hours showed single phase structure, e.g. as shown in Fig. 5 and Fig. 6.

### Example 4

### Preparation of Mixed Oxide ZrO₂(55%) CeO₂(20%) Dy₂O₃(15%) La₂O₃(7%) Pr₆O₁₁(3%)

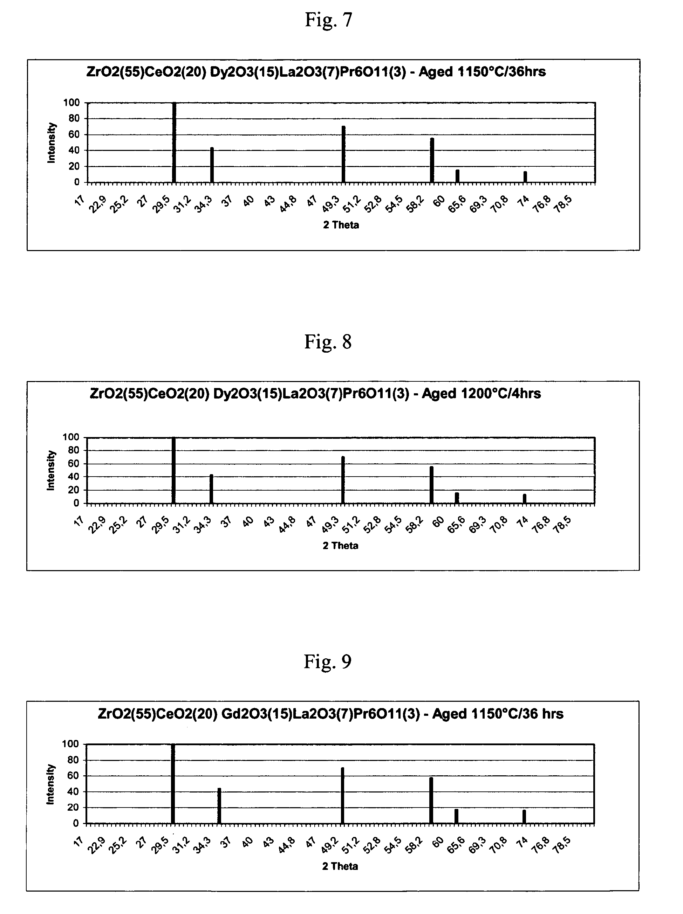

82.5 g of Zirconyl-nitrate solution (ZrO₂ 20%), 15.19 g of Cerium nitrate (CeO₂ 39.5%), 5.57 g of Lanthanum nitrate (La₂O₃ 37.7%), 2.31 g of Praseodymium nitrate (Pr₆O₁₁ 39.02%) and 11.04 g of Dysprosium nitrate (Dy₂O₃ 40.75%) were dissolved in 485 mL of deionised water and stirred for a few minutes until the solution became clear. To the mixture obtained 55.94 mL of cold 35% H₂O₂ (10°C) were added and the mixture obtained was stirred for approximately 45 minutes. To the mixture obtained 24% aqueous ammonia solution (10°C) was added dropwise at room temperature with a dropping rate of 40 mL /minute and a pH of 9.56 was adjusted. The further procedure was performed analogously as described in example 1, but using 10.56 g of lauric acid instead of 17.77 g. 30 g of a mixed oxide composition comprising ZrO₂ (55%), CeO₂(20%), Dy₂O₃ (15%), La₂O₃ (7%) and Pr₆O₁₁ (3%) were obtained.
BET (fresh prepared material): 116 m²/g
BET (after ageing) at 1100°C / 4 hours: 18.6 m²/g
XRD spectra after ageing 1150°C / 36 hours and 1200°C / 4 hours showed single phase structure, e.g. as shown in Fig 7 and Fig. 8.

### Example 5

### Preparation of Mixed Oxide ZrO₂(55%) CeO₂(20%) Gd₂O₃(15%) La₂O₃(7%) Pr₆O₁₁(3%)

102.8 g of Zirconyl-nitrate solution (ZrO₂ 21.4%), 20.25 g of Cerium nitrate (CeO₂ 39.5%), 7.43 g of Lanthanum nitrate (La₂O₃ 37.7%) and 3.08 g of Praseodymium nitrate (Pr₆O₁₁ 39.02%) were dissolved in 660 mL of deionised water and the mixture obtained was stirred. On the other hand 6.01 g of Gd₂O₃ were suspended in 10 mL of deionised water and conc. Nitric acid was added dropwise along with constant stirring until a clear solution was obtained. The gadolinium nitrate solution obtained was added to mixed metal nitrate solution and the mixture obtained was further stirred for a few minutes. To the mixture obtained 70.43 mL of cold (10°C) 35% H₂O₂ were added and the mixture obtained was stirred for approximately 45 minutes. To the mixture obtained 24% ammonia solution (10°C) was added dropwise at room temperature with a dropping rate of 40 mL / minute and a pH of 9.62 was adjusted.

The further procedure was performed analogously as described in example 1, but using 13.3 g of lauric acid instead of 17.77 g. 40 g of a mixed oxide composition comprising ZrO₂ (55%), CeO₂ (20%), Gd₂O₃ (15%), La₂O₃ (7%) and Pr₆O₁₁ (3%) were obtained.

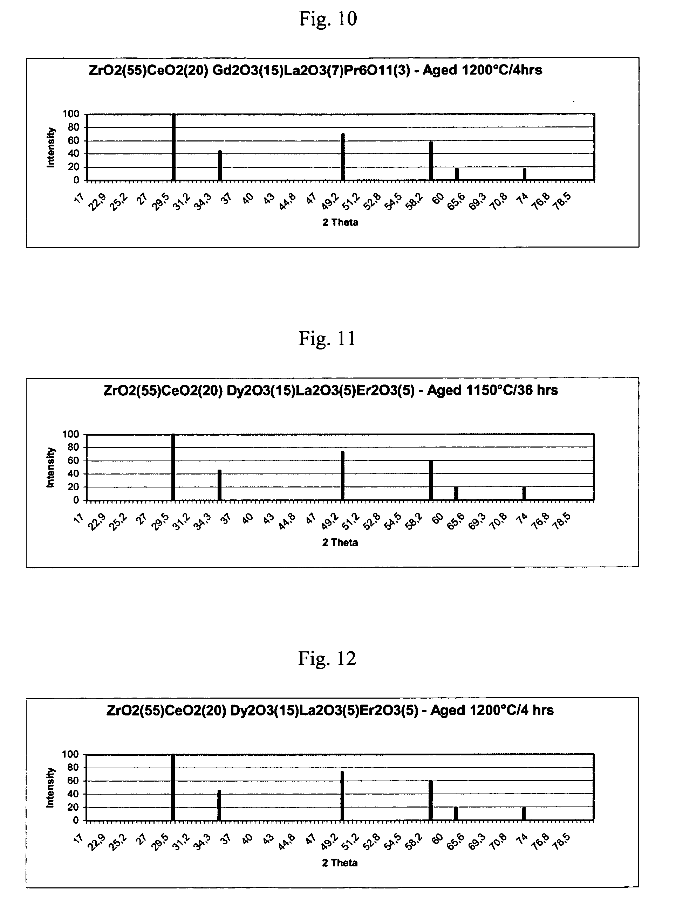

BET (fresh prepared material): 103.2 m²/g. BET (after ageing) at 1100°C / 4h: 17.7 m²/g. XRD spectra after ageing at 1150°C / 36 hours and 1200°C / 4 hours showed single phase structure e.g. as shown in Fig 9 and Fig. 10.

### Example 6

### Preparation of ZrO₂(55%) CeO₂(20%) Dy₂O₃(15%) La₂O₃(5%) Er₂O₃(5%)

82.5 g of Zirconyl-nitrate solution (ZrO₂ 20%), 15.19 g of Cerium nitrate(CeO₂ 39.5%), 3.98 g of Lanthanum nitrate (La₂O₃ 37.7%), 3.58 g of Erbium nitrate (Er₂O₃ 41.9%) and 11.04 g of Dysprosium nitrate (Dy₂O₃ 40.75%) were dissolved in 485 mL of deionised water and the mixture obtained was stirred for a few minutes till the solution became clear. To the mixture obtained 55.62 mL of cold (10°C) 35% H₂O₂ were added and the mixture obtained was stirred for approximately 45 minutes. To the mixture obtained 24% ammonia solution (10°C) was added dropwise at room temperature with a dropping rate of 40 mL / minute and a pH of 9.56 was adjusted. The further procedure was performed analogously as described in example 1, but using 10.5 g of lauric acid instead of 17.77 g, 30 g of a mixed oxide composition comprising ZrO₂ (55%), CeO₂ (20%), Dy₂O₃ (15%), La₂O₃ (5%) and Er₂O₃ (5%) were obtained.
BET (fresh prepared material): 106.8 m²/g
BET (after ageing) 1100°C / 4 hours: 18.6 m²/g
XRD spectra after ageing 1150°C / 36 hours and 1200°C / 4 hours showed single phase structure, e.g. as shown in Fig 11 and Fig. 12.

### Example 7

### Preparation of ZrO₂(60%) CeO₂(15%) Y₂O₃(20%) Er₂O₃(1.5%) Pr₆O₁₁(3.5%)

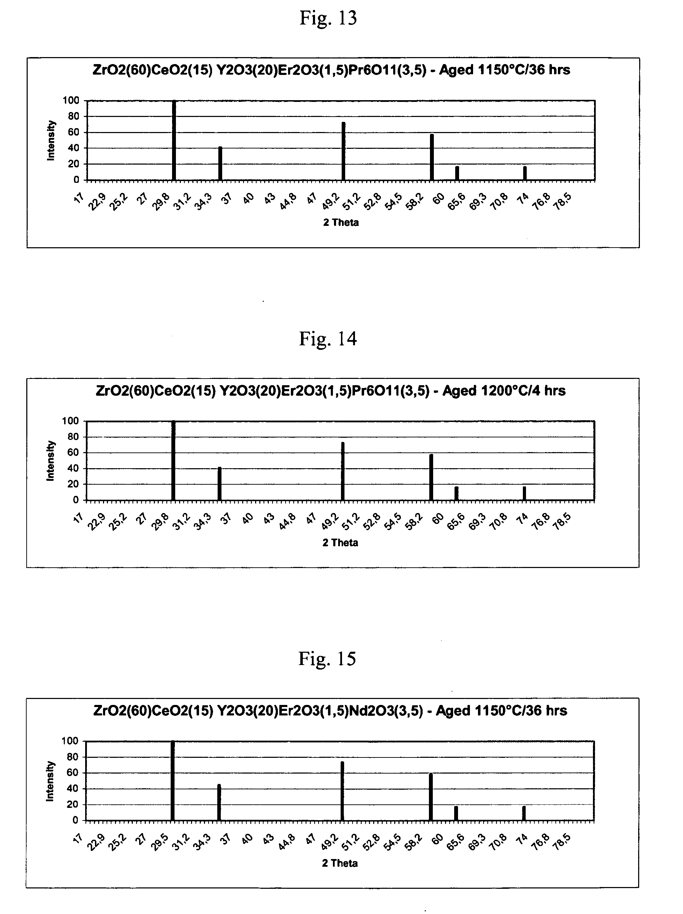

140.2 g of Zirconyl-nitrate solution (ZrO₂ 21.4%), 18.99 g of Cerium nitrate(CeO₂ 39.5%), 41.84 g of Yttrium nitrate (Y₂O₃ 23.9%), 4.48 g of praseodymium nitrate (Pr₆O₁₁ 39.02%) and 1.79 g of Erbium nitrate (Er₂O₃ 41.9%) were dissolved in 792 mL of deionised water and the mixture obtained was stirred for a few minutes until the solution became clear. To the mixture obtained 108.76 mL of cold (10°C) 35% H₂O₂ were added and the mixture obtained was stirred for approximately 45 minutes. To the mixture obtained 24% aqueous ammonia solution (10°C) was added dropwise at room temperature with a dropping rate of 40 mL / minute and a pH 9.53 was adjusted. The further procedure was performed analogously as described in example 1, but using 20.53 g of lauric acid instead of 17.77 g. 50 g of a mixed oxide composition comprising ZrO₂ (60%), CeO₂ (15%), Y₂O₃ (20%), Er₂O₃ (1.5%) and Pr₆O₁₁ (3.5%) were obtained.
BET (fresh prepared material): 128 m²/g
BET (after ageing) at 1100°C / 4 hours: 17.7 m²/g
BET (after ageing) at 1150°C / 36 hours: 8.32 m²/g
XRD spectra after ageing 1150°C / 36 hours and 1200°C / 4 hours showed single phase structure, e.g. as shown in Fig 13 and Fig. 14.

### Example 8

### Preparation of ZrO₂(60%) CeO₂(15%) Y₂O₃(20%) Er₂O₃(1.5%) Nd₂O₃(3.5%)

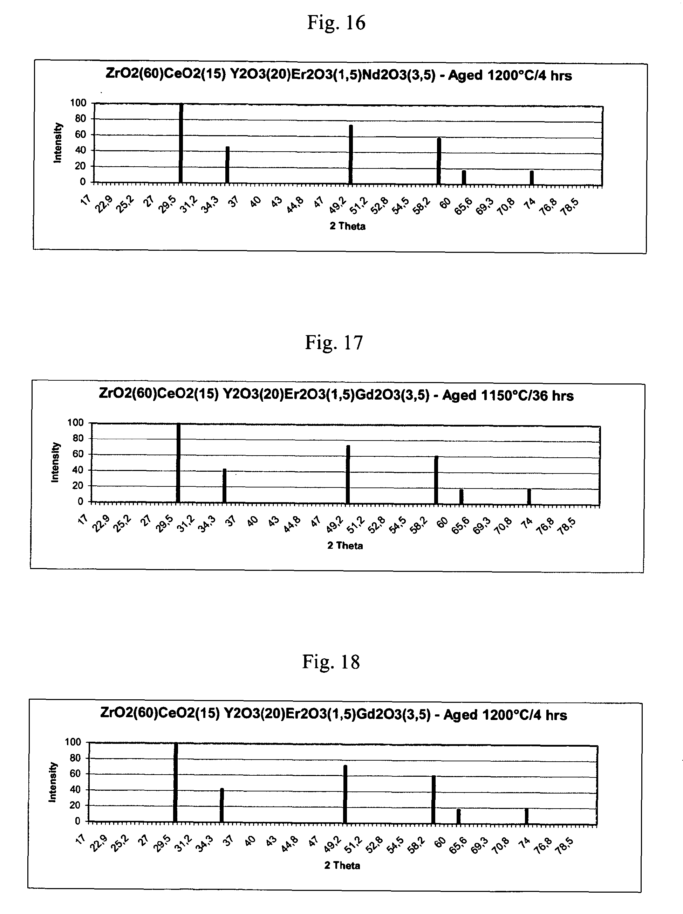

140.2 g of Zirconyl-nitrate solution (ZrO₂ 21.4%), 18.99 g of Cerium nitrate (CeO₂ 39.5%), 41.84 g of Yttrium nitrate (Y₂O₃ 23.9%), 4.61 g of neodymium nitrate (Nd₂O₃ 38%) and 1.79 g of Erbium nitrate (Er₂O₃ 41.9%) were dissolved in 792 mL of deionised water and the mixture obtained was stirred for a few minutes until the solution became clear. To the mixture obtained 108.81 mL of cold (10°C) 35% H₂O₂ was added and the mixture obtained was stirred for approximately 45 minutes. To the mixture obtained 24% aqueous ammonia solution (10°C) was added dropwise at room temperature with a dropping rate of 40 mL /minute and a pH of 9.55 was adjusted. The further procedure was performed analogously as described in example 1, but using 20.53 g of lauric acid instead of 17.77 g. 50 g of a mixed oxide composition comprising ZrO₂ (60%), CeO₂ (15%), Y₂O₃ (20%), Er₂O₃ (1.5%) and Nd₂O₃ (3.5%) were obtained.
BET (fresh prepared material): 155 m²/g
BET (after ageing) 1100°C / 4 hours: 21.5 m²/g
BET (after ageing) 1150°C / 36 hours: 10.2 m²/g
XRD spectra after ageing 1150° C / 36 hours and 1200°C / 4 hours showed single phase structure, e.g. as shown in Fig 15 and Fig. 16.

### Example 9

### Preparation of ZrO₂(60%) CeO₂(15%) Y₂O₃(20%) Er₂O₃(1.5%) Gd₂O₃(3.5%)

140.2 g of Zirconyl-nitrate solution (ZrO₂ 21.4%), 18.99 g of Cerium nitrate (CeO₂ 39.5%), 41.84 g of Yttrium nitrate (Y₂O₃ 23.9%) and 1.79 g of Erbium nitrate (Er₂O₃ 41.9%) were dissolved in 792 mL of deionised water. On the other hand 1.76 g of Gd₂O₃ were suspended in 10 mL of deionised water and conc. HNO₃ was added dropwise with stirring to obtain a clear Gadolinium nitrate solution which was added to the above mixed metal nitrate solution. The mixture obtained was stirred for a few minutes until the solution became clear. To the mixture obtained 110.04 mL of cold (10°C) 35% H₂O₂ were added and the mixture obtained was stirred approximately for 45 minutes. To the mixture obtained 24% ammonia solution (10°C) was added dropwise at room temperature with a dropping rate of 40 mL / minute and a pH of 9.55 was adjusted. The further procedure was performed analogously as described in example 1, but using 20.8 g of lauric acid instead of 17.77 g. 50 g of a mixed oxide composition comprising ZrO₂ (60%), CeO₂ (15%), Y₂O₃ (20%), Er₂O₃ (1.5%) and Gd₂O₃ (3.5%) were obtained.
BET (fresh prepared material): 122.7 m²/g
BET (after ageing) 1100°C / 4 hours: 20.7 m²/g
BET (after ageing) 1150°C / 36 hours: 9.0 m²/g
XRD spectra after ageing 1150°C / 36 hours and 1200°C / 4 hours showed single phase structure, e.g. as shown in Fig 17 and Fig. 18.

### Comparative examples

### Comparative Example 1

**Preparation of ZrO₂(58.71%) CeO₂(31.54%) La₂O₃(4.78%) Y₂O₃(4.97%) = Zr₀,₆₅ Ce_{0,25}** La **0,04 Y_{0,06} O ₁,₉₅** of example 5 of US 6,387,338

60g of above composite material was made by dissolving 133.9 g of Zirconyl-nitrate solution (ZrO₂ 26.3%), 63.08 g of Cerium nitrate (CeO₂ 30%), 7.61 g of Lanthanum nitrate (La₂O₃ 37.7%), and 12.48 g of Yttrium nitrate (Y₂O₃ 23.9%) in 230 mL of deionised water. The mixture obtained was slowly added with vigorous stirring to 0,76 L of 3M NH₄OH solution, which resulted in formation of a precipitate. The mixture obtained was stirred for 3 hours at room temperature, the precipitate obtained was isolated by filtration and washed with deionised water in order to remove excess of NH₄NO₃. The precipitate obtained was calcined at 600°C in air for 2 hours.
BET (fresh prepared material): 75.2 m²/g
BET (after ageing) 1100°C / 4 hours: 3.8 m²/g

### Comparative Example 2

### Preparation of ZrO₂(58,7%)CeO₂(27,5%)Y₂O₃(2,5%)Er₂O₃(2,5%)La₂O₃(6,3%)_{P}r₆O₁₁(2,5%)

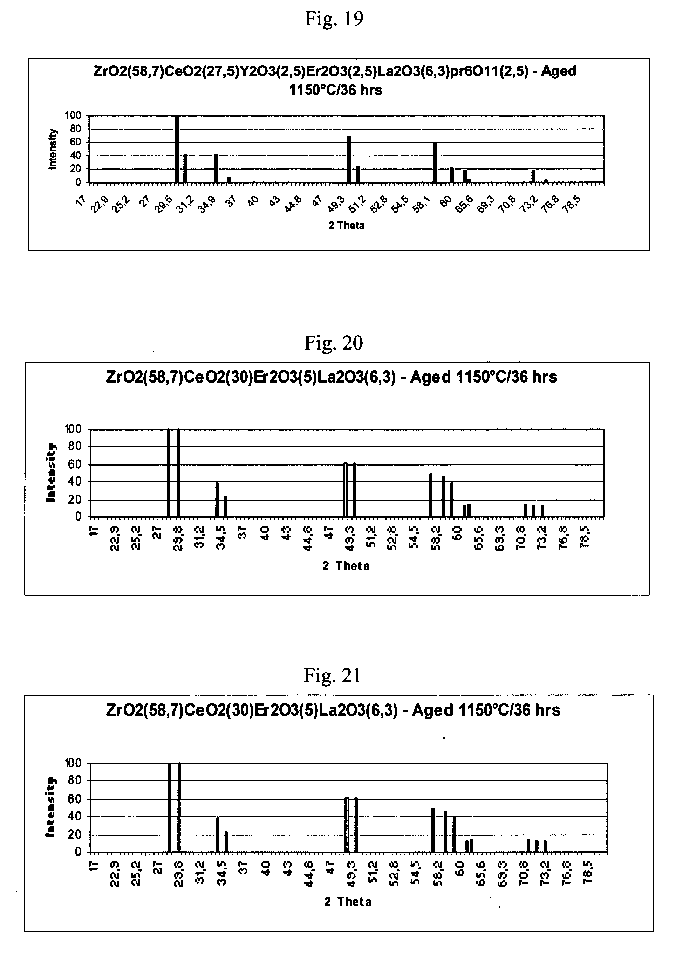

137.15 g of Zirconyl-nitrate solution (ZrO₂ 21.4%), 27.5 g of Cerium nitrate (CeO₂ 39.5%), 8.36 g of Lanthanum nitrate (La₂O₃ 37.7%) and 2.98 g of Erbium nitrate (Er₂O₃ 41.9%), 5,23 g Yttrium nitrate (Y₂O₃ 23.9%) and 3,2 g of Praseodymium nitrate (Pr₆O₁₁ 39.02%) were dissolved in 810 mL of deionised water and the mixture obtained was further stirred for a few minutes. To the mixture obtained 96.68 mL of cold 35% H₂O₂ (10°C) was added and the mixture obtained was stirred for at least 45 minutes. To the mixture obtained 24% ammonia solution (10°C) was added dropwise at room temperature with a dropping rate of 40 mL /minute and a pH of 9.5 was adjusted. The further procedure was performed analogously as described in example 1, but using 18.25 g of lauric acid instead of 17.77 g. 40 g of a mixed oxide composition comprising ZrO₂ (58,7%), CeO₂ (27,5%), Y₂O₃ (2,5%), Er₂O₃ (2,5%), La₂O₃ (6,3%) and Pr₆O₁₁ (2,5%) were obtained.
BET (fresh prepared material): 113 m²/g
BET (after ageing) 1100°C / 4 hours: 23.3 m²/g
XRD spectrum after 1150°C / 36 hours showed segregation of phases, e.g. as shown in Fig 19.

### Comparative Example 3

### Preparation of ZrO₂(58.7%) CeO₂(30%) La₂O₃(6.3%) Er₂O₃(5%)

246.75 g of Zirconyl-nitrate solution (ZrO₂ 20%), 37.97 g of Cerium nitrate (CeO₂ 39.5%), 8.36 g of Lanthanum nitrate (La₂O₃ 37.7%), and 5.97 g of Erbium nitrate (Er₂O₃ 41.9%) were dissolved in 800 mL of deionised water and stirred for a few minutes until the solution became clear. To the mixture obtained 94.75 mL of cold (10°C) 35% H₂O₂ were added and the mixture obtained was stirred for approximately 45 minutes. To the mixture obtained 24% ammonia solution (10°C) was added dropwise at room temperature with a dropping rate of 40 mL / minute and a pH of 9.5 was adjusted. The further procedure was performed analogously as described in example 1, but using 17.88 g of lauric acid instead of 17.77 g. 50 g of a mixed oxide composition comprising ZrO₂(58.7%) CeO₂(30%) La₂O₃(6.3%) Er₂O₃(5%) were obtained.
BET (fresh prepared material): 88.5 m²/g
BET (after ageing) 1100°C / 4 hours: 19 m²/g
XRD spectrum after 1150°C / 36 hours showed segregation of phases, e.g. as shown in Fig. 20.

### Comparative Example 4

### Preparation of ZrO₂(73.69%) CeO₂(21.11%) Er₂O₃(5.19%)

The preparation was carried out analogously to example 3 in US 6,387,338 with the exception that Erbium nitrate was used instead of Yttrium nitrate.
110.5 g of Zirconyl-nitrate solution (ZrO₂ 20%), 21.11 g of Cerium nitrate (CeO₂ 30%) and 3.72 g of Erbium nitrate (Er₂O₃ 41.9%) were dissolved in 300 mL of deionised water and the mixture obtained was slowly added with vigorous stirring to 1 L of 3M NH₄OH solution, which resulted in formation of mixed hydrous oxide. The mixture obtained was stirred for 3 hours at room temperature. A precipitate obtained was isolated by filtration and washed with deionised water in order to remove excess of NH₄NO₃. The precipitate obtained was calcined at 600°C in air for 2 hours.
30 g of a mixed oxide composition comprising ZrO₂ (73.69%), CeO₂ (21.11%) and Er₂O₃ (5.19%).
BET (fresh prepared material): 72.9 m²/g
BET (after ageing) 1000°C / 6 hours: 9.9 m²/g
XRD spectrum after 1150°C / 36 hours showed segregation of phases, e.g. as shown in Fig. 21.

## Claims

1. Composition in the form of a solid-solid solution which is phase stable at 1150°C /36 hours and at 1200° / 4 hours, the composition comprising
- oxides of zirconium and cerium wherein the oxide of zirconium is enriched,
- a stabilizer in an amount of 10% to 30% by weight wherein the stabilizer is selected from an oxide of erbium, oxide of gadolinium, oxide of dysprosium, or oxide of yttrium, and optionally one ore more dopant, with the proviso that,
- if an oxide of yttrium is present as a stabilizer, then the dopant is other than an oxide of lanthanum.

2. Composition according to claim 1, wherein the stabilizer is selected from an oxide of erbium, oxide of gadolinium or oxide of dysprosium.

3. Composition according to any one of claims 1 or 2, wherein the stabilizer is selected from an oxide of erbium or oxide of dysprosium.

4. Composition according to any one of claims 1 to 3 comprising at least one dopant.

5. Composition according to claim 4 comprising a dopant in an amount of up to 8% by weight.

6. Composition according to any one of claims 1 to 5, comprising 45% to 65% by weight of ZrO₂.

7. Composition according to any one of claims 1 to 6, comprising 10% to 30% by weight of CeO₂.

8. Composition according to any one of claims 1 to 7,wherein the stabilizer and the total amount of dopant, if present, are in a weight ratio of from 1.5:1 to 5:1.

9. Composition in the form of a solid-solid solution comprising oxides of zirconium and cerium wherein the oxide of zirconium is enriched, a stabilizer in an amount of 10% to 30% by weight wherein the stabilizer is selected from an oxide of erbium or oxide of dysprosium, and optionally one ore more dopant.

10. Composition according to any one of claims 1 to 9, wherein the composition exhibits a thermal stability in surface area of at least 15 m²/g after treatment at 1100°C / 4 hours.

11. The use of a composition according to any preceding claim in as a component in a system for exhaust gas after treatment.

12. Process for the preparation of a composition in the form of a solid-solid solution comprising oxides of zirconium and cerium and optionally comprising further rare earth metal oxide(s) comprising
(a) providing an aqueous solution of a zirconyl salt, a cerium salt and optionally further rare earth metal salt(s) in a desired stoechiometric amount of the final product,
(b) treating the aqueous solution of (a) with H₂O₂,
(c) treating the solution obtained in step (b) with ammonia and adjusting a pH of ≥ 7.0,
(d) treating the solution obtained in step (c) with an additive,
(e) isolating the precipitate formed,
and
(f) calcining the precipitate obtained in step (e), optionally after drying.
